Europäisches Patentamt

European Patent Office

Office européen des brevets

(19)

(11) Veröffentlichungsnummer: **0 246 441**
**B1**

(12) **EUROPÄISCHE PATENTSCHRIFT**

(45) Veröffentlichungstag der Patentschrift: **04.07.90**

(21) Anmeldenummer: **87105299.9**

(22) Anmeldetag: **10.04.87**

(51) Int. Cl.⁵: **F 01 P 3/20**, F 01 P 7/16, F 02 B 29/04

(54) **Kühlanordnung für Verbrennungskraftmaschinen.**

(30) Priorität: **23.05.86 DE 3617350**

(43) Veröffentlichungstag der Anmeldung:
**25.11.87 Patentblatt 87/48**

(45) Bekanntmachung des Hinweises auf die
Patenterteilung:
**04.07.90 Patentblatt 90/27**

(84) Benannte Vertragsstaaten:
**DE FR GB SE**

(56) Entgegenhaltungen:
**WO-A-82/04095**
**DE-A-2 156 704    DE-B-1 476 384**
**DE-A-2 545 227    FR-A-2 305 591**
**DE-A-3 047 672    FR-A-2 514 484**
**DE-A-3 335 434**

**GLASERS ANNALEN, Band 87, Nr. 5, Mai 1963,
Seiten 296-312, Berlin, DE; E. PFLUG:
"Dieselmotoren, Kühlanlagen und elektrische
Ausrüstung der neuen Diesellokomotiven V200"**

(73) Patentinhaber: **Krupp MaK Maschinenbau GmbH**
**Falckensteiner Strasse 2-4**
**D-2300 Kiel 17 (DE)**

(72) Erfinder: **Aeffner, Kurt, Dipl.-Ing.**
**Wörthstrasse 6**
**D-2300 Kiel 1 (DE)**

(74) Vertreter: **Hansmann, Dierk, Dipl.-Ing.**
**Jessenstrasse 4**
**D-2000 Hamburg 50 (DE)**

**Beschreibung**

Die Erfinding bezieht sich auf eine Kühlanordnung in Verbrennungskraftmaschinen relativ großer Leistung mit einem wassergekühlten Turbolader, wobei ein über einen Temperaturfühler regelbarer, eine Kühler und eine Pumpe umfassender Kühlwasserzwangsumlauf ausgebildet ist und Turbolader und Motor im Kühlkreislauf hintereinander geschaltet sind und das Kühlwasser zuerst durch den Turbolader und danach durch den Motor geführt ist.

Bei Anordnungen dieser Art ist eine Parallelschaltung von Turbolader und Motor gemäß der DE—AS—30 47 672 vorgesehen. Hierbei besteht der Mangel, daß die erforderliche Kühlwasserdurchsatzmenge relativ hoch ist, um eine zulässige Aufwärmung des Kühlwassers im Turbolader nicht zu überschreiten. Damit ist auch der Aufwand für die Antriebsenergie der Pumpe relativ hoch und es wird das Verhältnis von Verlustenergie zu Nutzenergie ungünstig beeinflußt.

Es ist ferner eine Kühlanordnung aus der Zeitschrift GLASERS ANALEN, Band 87, Nr. 5, 1963, Seiten 296—312, insbesondere Seite 307, mit einer Ladegruppe bekannt geworden, die parallel zu einem Getriebe- und Schmieröl—Wärmetauscher geschaltet ist, um den Gesamtvolumenstrom des Kühlwassers zu vergrößern. Es besteht aber bei derartigen Anordnungen das Problem, den Gesamtvolumenstrom des Kühlwassers zu verkleinern.

Aufgabe der Erfindung ist es, eine gattungsgemäße Anordnung zu verbessern, die eine Reduzierung der Wasserdurchsatzmenge und der Pumpenantriebsleistung ermöglicht, sowie günstige Verhältnisse bei geringer Motorbelastung und eine lastabhängige Selbstregelung der Ladelufttemperatur zu ermöglichen.

Die Lösung dieser Aufgabe erfolgt erfindungsgemäß dadurch, daß am Kühlwasseraustritt des Kühlers ein Ladeluftkühler angeordnet ist und daß das gesamte Kühlwasser durch den Turbolader und durch den Ladeluftkühler geführt ist.

Durch diese Anordnung wird ein reduzierter Kühlwasservolumenstrom und geringere Pumpenleistung erforderlich. Der Motor befindet sich damit in einem Hochtemperaturkreis, wobei dieses bei geringen Belastungen besondere Vorteile ergibt. Die Verminderung der Wassermenge durch die Reihenschaltung ermöglicht außerdem eine lastabhängige Selbstregelung der Ladelufttemperatur, da die abzuführende Wärmemenge im Motor und im Turbolader aufgrund des geringen Kühlwasservolumenstroms eine große Temperaturdifferenz zwischen dem Kühlwasseraustritt am Motor und dem Eintritt in den Turbolader bewirkt und auch die Einbindung des Ladeluftkühlers in den Kühlwasserkreislauf möglich macht.

Eine vorteilhafte Anordnung einer Einkreiskühlung wird dadurch gebildet, daß der Kühlwasserkreislauf durch eine Reihenschaltung der Komponenten in Form von Ladeluftkühler, Pumpe, Turbolader, Motor, Temperaturfühler mit Regeleinrichtung und Kühlwasserkühler gebildet ist.

Um den Durchsatz von kleinen Wasser- und großen Luftmengen zu erzielen, ist vorgesehen, daß der Ladeluftkühler vielflutig ausgebildet ist.

Unter vielflutigkeit wird dabei verstanden, daß kühlwasserseitig durch eine Anordnung von Trennstegen in den Umkehrhauben das Rohrbündel in mehrere Sektionen aufgeteilt wird, die untereinander in Reihe geschaltert sind, um die Strömungsgeschwindigkeit des Kühlerswassers zu erhöhen.

In der Zeichnung ist ein Ausführungsbeispiel der Erfindung schematisch dargestellt. Es zeigen:

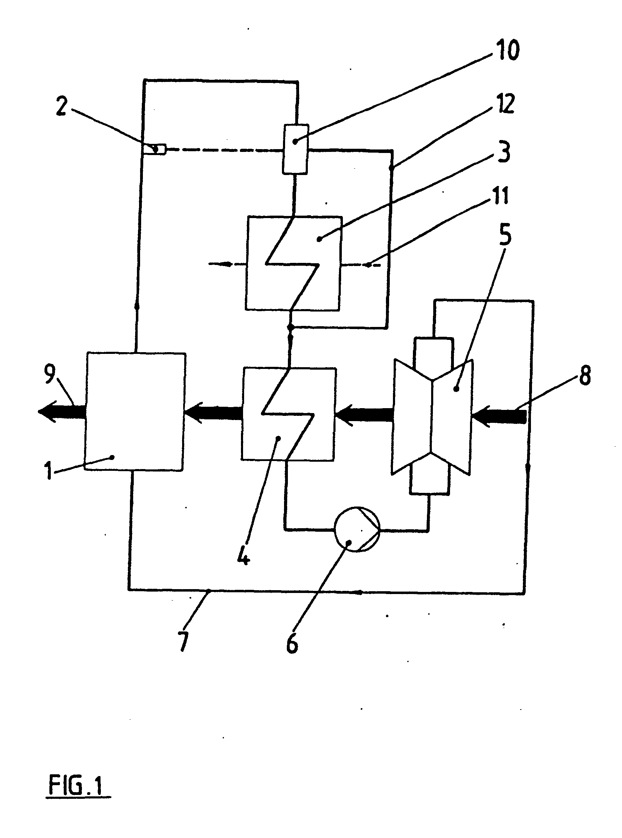

Fig. 1 ein Schema einer Anordnung und

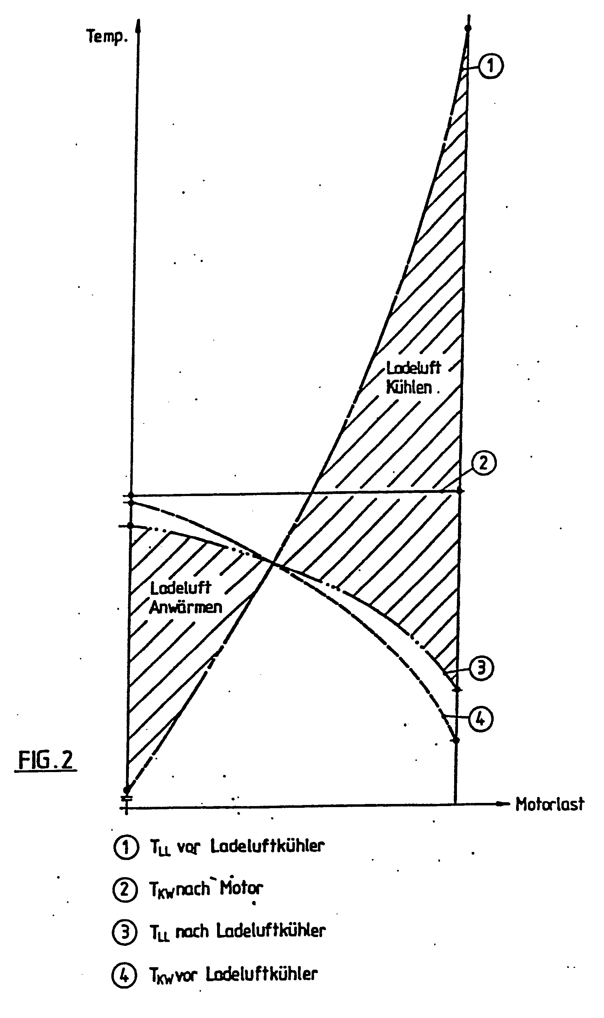

Fig. 2 ein Diagramm des Temperaturverlaufs von Ladeluft und Kühlwasser über die Motorlast.

Bei der dargestellten Anordnung wird der Kühlwasserkreislauf über Leitungen gebildet und durch eine Pumpe 6 über eine abgasgetriebenen Turbolader 5 geführt sowie ausschließlich einer in Reihenschaltung angeordneter Verbrennungskraftmaschine 1 zugeführt. Am Motoraustritt befindet sich im Kühlwasserkreislauf ein Temperatur-fühler 2, der eine im Kreislauf liegende Regelanordnung 10 steuert, die beispielsweise als Drei-Wege-Ventil zur Einstellung der Kühlwassertemperatur ausgebildet ist und ermöglicht zu diesem Zweck einen Kühlwasserkühler 3, der von einem Kühlmedium durchströmt wird, einzuschalten bzw. über eine Bypassleitung 12 umgangen wird. Anschließend wird der Kreislauf über einen Ladeluftkühler 4 geführt und dann über die Pumpe 6 an den Turbolader 5 angeschlossen. Der Frischlufteintritt 8 ist über den Turbolader 5 durch den Ladeluftkühler 4 zum Motor 1 geführt und verläßt diesen als Abgas 9.

Die abzuführend Wärmemenge im Motor 1 und Turbolader 5 bewirkt aufgrund des geringen Kühlwasservolumenstroms eine große Temperaturdifferenz zwischen Motoraustritt und Turbolader-Eintritt, so daß auch der Ladeluftkuhler 4 in den Kühlwasserkreislauf eingebunden werden kann.

Im Leerlauf des Motors 1 ist bei geringster abzuführender Wärmemenge die Vorlauftemperatur am Eintritt in den Ladeluftkühler 4 nahezu gleich der meistens auf ein hohes Niveau eingeregelten Temperatur am Kühlwasseraustritt der Kraftmaschine 1. Hierdurch wird eine Anwärmung der Ladeluft auf eine Temperatur bewirkt, die ungefähr nur 5 bis 10 K niedriger als die Kühlwassertemperatur ist und für die Vermeidung von korrodierenden Niederschlägen wichtig ist.

Mit steigender Belastung des Motors 1 und zunehmender Einschaltung des Kühlwasserkühlers 3 zur Konstanthaltung der Temperatur beim Temperaturfühler 2 sinkt die Vorlauftemperatur am Eintritt in den Ladeluftkühler 4 in dem Maße, wie die abzuführende Gesamtwärmemenge zunimmt. Es erfolgt hierbei eine Abkühlung der Ladeluft auf eine Temperatur, die bei voller Belastung des Motors etwa 10 bis 15 K höher als die Kühlwasser-Vorlauftemperatur ist.

Durch die Reihenschaltung von Turbolader 5 und Motor 1 im Kühlwasserkreislauf wird daher eine lastabhängige Selbstregelung der Ladelufft-

emperatur ohne zusätzliche Regelorgane ermöglicht.

Eine entsprechende Veränderung des Kühlwasservolumenstroms und Sollwertverstellung am Temperaturfühler 2 ermöglichen damit eine einfache Anpassung an unterschiedliche, auch extreme Umgebungsbedingungen, wie einen Betrieb in den Tropen oder in der Arktis.

## Patentansprüche

1. Kühlanordnung in Verbrennungskraftmaschinen (1) relativ großer Leistung mit einem wassergekühlten Turbolader (5), wobei ein über einen Temperaturfühler (2) regelbarer, einen Kühler (3) und eine Pumpe (6) umfassender Kühlwasserzwangsumlauf ausgebildet ist und Turbolader (5) und Motor (1) im Kühlkreislauf hinereinander geschaltet sind und das Kühlwasser zuerst durch den Turbolader (5) und danach durch den Motor (1) geführt ist, dadurch gekennzeichnet, daß am Kühlwasseraustritt des Kühlers (3) ein Ladeluftkühler (4) angeordnet ist und daß das gesamte Kühlwasser durch den Turbolader (5) und durch den Ladeluftkühler (5) geführt ist.

2. Kühlanordnung nach Anspruch 1, dadurch gekennzeichnet, daß der Kühlwasserkreislauf durch eine Reihenschaltung der Komponenten in Form von Ladeluftkühler (4), Pumpe (6), Turbolader (5), Motor (1), Temperaturfühler (2) mit Regeleinrichtung (10) und Kühlwasserfühler (3) gebildet ist.

3. Kühlanordnung nach einem der Ansprüche 1 oder 2, dadurch gekennzeichnet, daß der Ladeluftkühler (4) vielflutig ausgebildet ist.

## Revendications

1. Système de refroidissement pour moteurs à combustion interne (1) de puissance relativement grande, dans le cas duquel il est prévu un turbocompresseur à suralimentation (5) refroidi par eau, une circulation forcée de l'eau de refroidissement, réglable à l'intervention d'une sonde de température (2) et comportant un refroidisseur (3) et une pompe (6), étant prévue, le turbocompresseur à suralimentation (5) et le moteur (1) étant montés l'un à l'arrière de l'autre dans le circuit de refroidissement et l'eau de refroidissement étant amenée à passer tout d'abord par le turbocompresseur à suralimentation (5) et ensuite par le moteur (1), le système étant caractérisé en ce qu'à la sortie de l'eau de refroidissement du refroidissement (3), il est prévu un refroidisseur d'air de charge (4) et en ce que la totalité de l'eau de refroidissement est amenée à passer par le turbocompresseur à suralimentation (5) et par le refroidisseur d'air de charge (4).

2. Système de refroidissement suivant la revendication 1, caractérisé en ce que le circuit d'eau de refroidissement est formé par un montage en série des éléments que constituent le refroidisseur d'air de charge (4), la pompe (6), le turbocompresseur à suralimentation (5), le moteur (1), la sonde de température (2), à laquelle est adjoint un dispositif de réglage (10), et le refroidisseur à eau de refroidissement (3).

3. Système de refroidissement suivant l'une ou l'autre des revendications 1 et 2, caractérisé en ce que le refroidisseur d'air de charge (4) est prévu à flux multiples.

## Claims

1. A cooling arrangement in internal combustion engines (1) of relatively large capacity comprising a water-cooled turbocharger (5), a forced cooling-water circulation being formed which comprises a radiator (3) and a pump (6) and can be controlled by means of a temperature sensor (2), the turbocharger (5) and engine (1) being connected one after the other in the cooling circuit and the cooling water being firstly conveyed through the turbocharger (5) and subsequently through the engine (1), characterised in that a charging air cooler (4) is arranged at the cooling water outlet of the radiator (3) and the entire cooling water is conveyed through the turbocharger (5) and through the charging air cooler (4).

2. A cooling arrangement according to claim 1, characterised in that the cooling water circuit consists of a series connection of the components in the form of charging air cooler (4), pump (6), turbocharger (5), engine (1), temperature sensor (2) with control device (10) and cooling-water radiator (3).

3. A cooling arrangement according to one of claims 1 or 2, characterised in that the charging air cooler (4) is designed with a plurality of ducts.

FIG.1

FIG.2

① $T_{LL}$ vor Ladeluftkühler

② $T_{KW}$ nach Motor

③ $T_{LL}$ nach Ladeluftkühler

④ $T_{KW}$ vor Ladeluftkühler